# EUROPÄISCHE PATENTSCHRIFT

(11) **EP 2 035 267 B1**
(45) Veröffentlichungstag und Bekanntmachung des Hinweises auf die Patenterteilung: **17.11.2010**
(21) Anmeldenummer: 07729949.3
(22) Anmeldetag: 06.06.2007
(51) Int. Cl.: B60T 10/02, B60T 5/00

(54) **HYDRODYNAMISCHER RETARDER**
HYDRODYNAMIC RETARDER
RALENTISSEUR HYDRODYNAMIQUE

(30) Priorität: 30.06.2006 DE 102006030791
(43) Veröffentlichungstag der Anmeldung: 18.03.2009
(73) Patentinhaber: ZF Friedrichshafen AG, 88038 Friedrichshafen (DE)
(72) Erfinder: GRUPP, Bernhard, 88250 Weingarten (DE); REISCH, Bernhard, 88316 Isny (DE); SAUTER, Frank, 88074 Meckenbeuren (DE); WANNINGER, Heinz, 88074 Meckenbeuren (DE)
(86) Internationale Anmeldenummer: PCT/EP2007/055574
(87) Internationale Veröffentlichungsnummer: WO 2008/000602

(56) Entgegenhaltungen:
- WO-A-00/53478
- DE-A1- 4 136 759
- DE-A1- 10 141 794
- DE-A1- 19 951 731
- US-A- 5 090 523

## Beschreibung

Die vorliegende Erfindung betrifft einen hydrodynamischen Retarder für ein Kraftfahrzeug nach der im Oberbegriff von Anspruch1 näher definierten Art.

Neben den Betriebsbremsen eines Fahrzeugs, insbesondere eines Nutzfahrzeugs, die im Regelfall einem Verschleiß unterliegende Reibungsbremsen sind, werden zusätzliche, verschleißfreie Verzögerungseinrichtungen von den Fahrzeugherstellern angeboten. Derartige Verzögerungseinrichtungen, beispielsweise Retarder oder Motorbremsen, können unter anderem dazu verwendet werden, die Fahrzeuggeschwindigkeit im Gefälle konstant zu halten.

Zu den Retardern zählen sowohl zusätzlich am Getriebe oder Motor angeordnete hydrodynamische, hydrostatische oder elektrodynamische Bremseinrichtungen, als auch solche Systeme, die in Form eines "Intarders" innerhalb des Getriebegehäuses vorgesehen sind. Des Weiteren werden Retarder in Primärretarder die in Abhängigkeit von der Motordrehzahl arbeiten, und in Sekundärretarder, die in Abhängigkeit von der Fahrzeuggeschwindigkeit arbeiten, unterschieden. Bei hydrodynamischen Retardern ist im Allgemeinen der Rotor zum Abbremsen des Fahrzeugs direkt mit einer Getriebewelle verbunden. Bei Primärretardern ist dies die Antriebswelle bzw. Getriebeeingangswelle, und bei Sekundärretardern ist dies die Getriebeabtriebswelle. Der Stator ist in der Regel gehäusefest. Der Retarder ist üblicherweise nicht aktiviert, wenn Rotor und Stator nicht mit Flüssigkeit befüllt sind.

Retarder werden bei Nutzfahrzeugen vor allem eingesetzt, um die beispielsweise bei einer Bremsung aus hoher Fahrgeschwindigkeit anfallende kinetische Bremsenergie aufzunehmen und in Wärme umzusetzen, sind aber auch für geforderte Dauerbremsleistungen gut geeignet, beispielsweise bei lang andauernder Bergabfahrt.

Bei hydrodynamischen Retardern wird die Strömungsenergie einer Flüssigkeit zum Bremsen benutzt, wobei das physikalische Wirkprinzip dem einer hydrodynamischen Kupplung mit feststehender Turbine entspricht. Demnach weist ein hydrodynamischer Retarder einen sich im Leistungsfluss befindlichen Rotor und einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Bei zum Stand der Technik gehörenden Retardern, welche einen gemeinsamen Ölhaushalt aufweisen, wird während einer bremsfreien Phase, also während eines Zugbetriebes, durch eine Pumpe Öl aus einem Getriebesumpf angesaugt und durch einen Filter und einen Wärmetauscher geleitet. Ein im Anschluss an den Wärmetauscher sitzendes Druckbegrenzungsventil regelt den Systemdruck so, dass genügend hydraulischer Druck zum Umschalten vorhandener Ventile und somit zum Einschalten des Retarders zur Verfügung steht. Durch diese Anordnung kann das Getriebeöl während einer bremsfreien Phase auf annähernd die Temperatur eines Fahrzeugkühlsystems gebracht werden. Somit kann das Getriebe bei hoher Belastung und/oder hoher Umgebungstemperatur gekühlt bzw. bei niedriger Belastung und/oder niedriger Umgebungstemperatur angewärmt werden. Im Bremsbetrieb des Retarders wird die Bremsenergie über den Wärmetauscher an das Fahrzeugkühlsystem abgegeben.

Nachteilig hierbei ist, dass eine unabhängige Abschaltung der Getriebetemperierung nicht möglich ist, da die Getriebetemperierung unmittelbar an den Betriebszustand (Bremsen oder Nichtbremsen) des Retarders gekoppelt ist. Es kann beispielsweise digital zwischen Retarderbetrieb und Getriebekühlung unterschieden werden. Beim Abschalten des Retarders wird das Öl direkt aus einem Getriebesumpf durch einen Wärmetauscher geleitet und gekühlt bzw. erwärmt, je nachdem, wie die Temperaturen zueinander liegen. Des Weiteren wird das erwärmte Öl aus einem Retarderkreislauf ohne Rückkühlung in den Getriebesumpf geführt. Ebenfalls nachteilig ist, dass durch die Verwendung einer Innenzahnradpumpe (Konstantpumpe) der Kühlölvolumenstrom nicht variabel gestaltet werden kann, womit in vielen Betriebszuständen zu viel Öl umgewälzt wird, was wiederum zu einem höheren Kraftstoffverbrauch führt.

In der DE 101 41 794 A1 wird ein hydrodynamischer Retarder für ein Kraftfahrzeug offenbart, welcher über einen hydraulischen Kreislauf angesteuert wird. Der hydraulische Kreislauf weist einen Wärmetauscher und eine Hydraulikpumpe auf, wobei das Fördervolumen der Hydraulikpumpe derart verstellbar ist, dass ein Volumenstrom unabhängig von der Fahrzeuggeschwindigkeit bzw. der Gelenkwellen- oder Retarderdrehzahl einstellbar ist. Gemäß einer Ausführungsform wird die Hydraulikpumpe so geschaltet bzw. geregelt, dass sich über einen weiten Drehzahlbereich ein konstanter Volumenstrom einstellt, welcher zum Befüllen und Regeln des Retarders ausreichend ist. Diese Konstruktion weist den Vorteil auf, dass kein Befüllspeicher benötigt wird. Außerdem ist die Wiederansprechzeit der Hydraulikpumpe gleich der Erstansprechzeit, so dass sich ein robustes zeitliches Verhalten ergibt. Wird eine Bremsung eingeleitet, so muss der Retarder möglichst schnell befüllt werden. Hierfür wird über ein Proportionalventil ein Steuerdruck erzeugt, der die Hydraulikpumpe auf eine maximale Verdrängung einstellt.

Auch hier tritt der oben beschriebene Nachteil auf, dass eine unabhängige Abschaltung der Getriebetemperierung nicht möglich ist, da die Getriebetemperierung unmittelbar an den Betriebszustand des Retarders gekoppelt ist. Im Zugbetrieb kann nicht unterschieden werden, ob ausschließlich eine Kühlung des Retarders erforderlich ist, oder ob zusätzlich das Grundgetriebe temperiert werden, bzw. ob keine thermische Anbindung an das Fahrzeugkühlsystem erfolgen soll.

Um einen geringen Kraftstoffverbrauch zu erzielen, versuchen Fahrzeughersteller die Kühlmitteltemperatur eines Fahrzeugkühlsystems zu erhöhen. Liegt diese Kühlmitteltemperatur allerdings höher als die ideale Getriebesumpftemperatur, so wird im Stand der Technik durch die Getriebetemperierung ein unnötig hohes Temperaturniveau im Grundgetriebe eingestellt, was zu Lebensdauereinbußen und/oder kürzeren Ölwechselintervallen führen kann. Ist die Öltemperatur zu niedrig, werden Schleppverluste größer, wodurch sich der Wirkungsgrad verschlechtert und der Kraftstoffverbrauch steigt.

Der vorliegenden Erfindung liegt die Aufgabe zugrunde, eine vom Betriebszustand eines Retarders unabhängige Getriebe- bzw. Retardertemperierung darzustellen und die Nachteile des Standes der Technik zu beseitigen. Die Öltemperatur eines Getriebes bzw. eines Retarders soll in einem idealen Bereich einstellbar sein.

Die der Erfindung zugrunde liegende Aufgabe wird durch einen, auch die kennzeichnenden Merkmale des Hauptanspruchs aufweisenden, gattungsgemäßen, hydrodynamischen Retarder gelöst.

Die Erfindung beinhaltet einen hydrodynamischen Retarder für ein Getriebe in einem Kraftfahrzeug, welcher einen Rotor und einen Stator aufweist. Der Retarder wird über ein elektrohydraulisches System angesteuert, welches unter anderem eine Steuerungs- und Regelungseinheit, einen Hydraulikkreislauf, Schaltventile und einen gemeinsamen Öl haushalt zwischen Getriebe und Retarder aufweist. Der Rotor und der Stator sind vorzugsweise in einem Retardergehäuse angeordnet, welches mit dem Hydraulikkreislauf verbunden ist. Der Hydraulikkreislauf weist einen Filter, eine Hydraulikpumpe, einen Wärmetauscher sowie ein Schaltventil und Hydraulikkanäle auf. Das Fördervolumen der Hydraulikpumpe ist derart verstellbar, dass ein Volumenstrom unabhängig von der Fahrzeuggeschwindigkeit bzw. der Gelenkwellen- oder Retarderdrehzahl einstellbar ist.

Das elektrohydraulische System ist derart ausgebildet, dass in Abhängigkeit verschiedener Randbedingungen eine Getriebe- bzw. Retardertemperierung gesteuert bzw. geregelt werden kann. Die Ansteuerung der im elektrohydraulischen System vorhandenen Ventile kann vorzugsweise elektrisch bzw. elektromagnetisch über eine Steuerungs- und Regelungseinheit (ECU) bzw. eine Retarderelektronik, eine Getriebeelektronik, einen Fahrzeugführungsrechner oder über ein beliebiges anderes Steuergerät erfolgen. Es ist auch denkbar, dass die Ventile derart ausgebildet sind, dass sie pneumatisch, hydraulisch oder über einen Stellmotor ansteuerbar sind. Die Ventile können in jeder bekannten Ventil-Bauform ausgeführt sein.

Durch das erfindungsgemäße elektrohydraulische System zur Steuerung bzw. Regelung eines Retarders kann zwischen einer Getriebetemperierung (Öl aus dem Getriebesumpf wird an die Temperatur eines Fahrzeugkühlsystems angepasst) und einer Retardertemperierung (Öl aus dem Retardersumpf/Ölreservoir wird an die Temperatur eines Fahrzeugkühlsystems angepasst) gewählt werden. Des Weiteren kann das elektrohydraulische System derart angesteuert werden, dass keine Temperierung stattfindet, also weder eine Getriebetemperierung noch eine Retardertemperierung erfolgt.

Eine Abschaltung der Temperierung kann aus verschiedenen Gründen sinnvoll sein. Wenn sowohl die Getriebeöltemperatur als auch die Retarderöltemperatur im optimalen Temperaturbereich liegen, dann ist keine Temperierung notwendig. Falls die Temperatur des Fahrzeugkühlsystems über der optimalen Öltemperatur des Getriebes bzw. des Retarders liegt, kann sich eine Temperierung schädlich auswirken. Durch ein unnötig hohes Temperaturniveau im Getriebe kann sich die Lebensdauer verschiedener Getriebekomponenten verkürzen und es können kürzere Ölwechselintervalle erforderlich werden. Des Weiteren ist es sinnvoll eine Temperierung abzuschalten, wenn das Fahrzeugkühlsystem an einer vorgegebenen thermischen Leistungsgrenze arbeitet. Durch eine Abschaltung der Temperierung findet somit kein zusätzlicher Wärmeeintrag vom Ölhaushalt in das Fahrzeugkühlsystem statt. Durch die Möglichkeit eine Getriebe- bzw. Retardertemperierung in bestimmten Betriebssituationen abzuschalten, kann der Leistungsbedarf der Hydraulikpumpe während dieser Zeit reduziert und somit der Kraftstoffverbrauch des Fahrzeugs gesenkt werden.

Im Folgenden wird das Grundprinzip der Erfindung, welche mehrere Ausführungsformen zulässt, an Hand einer Zeichnung beispielhaft näher erläutert.

Es zeigen:
- Fig. 1: ein Steuerschema eines hydrodynamischen Retarders während einer Bremsphase,
- Fig. 2: ein Steuerschema eines hydrodynamischen Retarders während einer Getriebetemperierung,
- Fig. 3: ein Steuerschema eines hydrodynamischen Retarders während einer Retardertemperierung,
- Fig. 4: einen Teil einer zweiten Ausführungsform des Steuer- schemas nach Fig. 3,
- Fig. 5: ein Steuerschema eines hydrodynamischen Retarders, bei welchem keine Temperierung durchgeführt wird,
- Fig. 6: eine zweite Ausführungsform eines Steuerschemas eines hydrodynamischen Retarders, bei welchem keine Tempe- rierung durchgeführt wird,
- Fig. 7: eine bekannte konstruktive Ausführungsform eines Schalt- ventils mit zwei Schaltstellungen und
- Fig. 8 eine: erfindungsgemäße Ausführungsform eines Schaltven- tils mit drei Schaltstellungen.

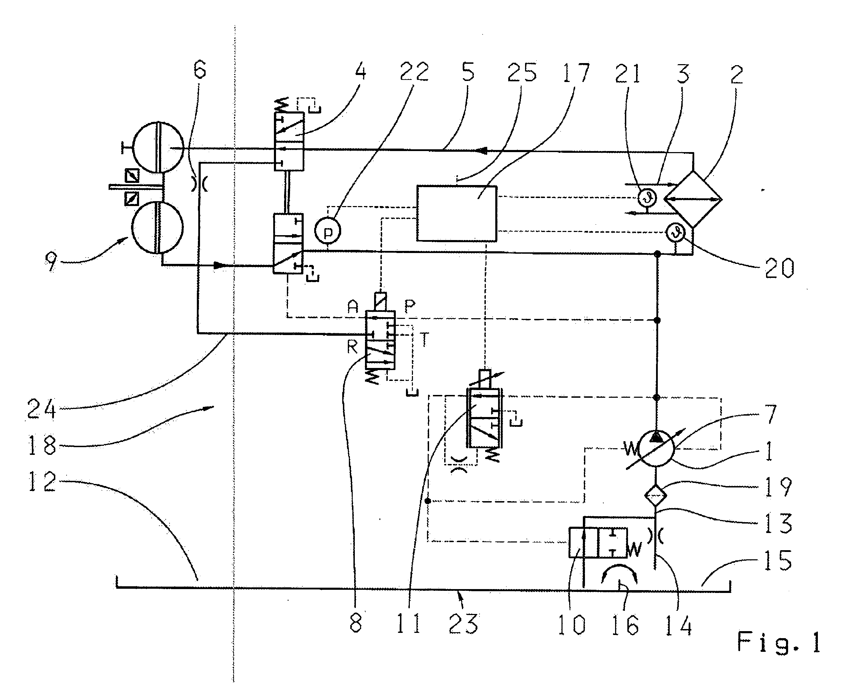

Gemäß Fig. 1 weist ein elektrohydraulisches System 18 zur Steuerung eines hydrodynamischen Retarders 9 eine Steuerungs- und Regelungseinheit 17, einen Hydraulikkreislauf 5, Schaltventile 4, 8, 10, 11 sowie einen gemeinsamen Ölhaushalt 23 auf. Der Hydraulikkreislauf 5 weist eine Hydraulikpumpe 1, einen Filter 19, einen Wärmetauscher 2 und das Schaltventil 4 auf und steht mit dem Retarder 9 in Verbindung. In einer Rückflussleitung 24 ist eine Blende 6 angeordnet Ferner ist die Steuerungs- und Regelungseinheit 17 mit Temperatursensoren 20, 21 und einem Drucksensor 22 verbunden. Über den ersten Temperatursensor 20 wird die Öltemperatur und über den zweiten Temperatursensor 21 wird die Temperatur eines Fahrzeugkühlsystems 3 erfasst. Der Drucksensor 22 kann zur Überwachung eines Regeldrucks für dein Retarder 9 vorgesehen sein Die Steuerungs- und Regelungseinheit 17 kann vorteilhafterweise mit einem Controller Area Network (CAN) 25 verbunden sein. Über die Steuerungs- und Regelungseinheit 17 sind unter anderem die Ventile 8, 11 ansteuerbar. Das erste Ventil 8 kann als Sicherheitsabschaltventil dienen und das zweite Ventil 11 ist vorzugsweise als Proportionalventil ausgebildet und dient zur Steuerung bzw. Regelung der Hydraulikpumpe 1 und des Befüllventils 10. Der gemeinsame Ölhaushalt 23 besteht aus einem Ölreservoir 12 des Retarders 9 und einem Getriebesumpf 15 eines Getriebes. Im elektrohy-draulischen System 18 ist vorgesehen, dass die Hydraulikpumpe 1 als eine in ihrem Verdrängungsvolumen verstellbare Pumpe ausgebildet ist, beispielsweise als Flügelzellenpumpe, Pendelschieberpumpe oder Kolbenpumpe. Durch einen Druck auf eine Rückführfläche 7 an der Hydraulikpumpe 1 kann diese einen erforderlichen Volumenstrom unabhängig von der Pumpendrehzahl selbständig regeln. Zwischen der Hydraulikpumpe 1 und dem Ölreservoir 12 bzw. dem Getriebesumpf 15 ist in einem Saugkanal 13 der Filter 19 angeordnet.

Im elektrohydraulischen System 18 ist das Schaltventil 8 vorgesehen. Der Verstellhub des Kolbens vom Schaltventil 8 kann durch einen Elektromagneten erzeugt werden. Durch eine entsprechende Ansteuerung des Elektromagneten wird eine Kraft erzeugt, welche auf den Kolben wirkt, wodurch dieser entsprechend verschoben wird und dadurch das Schaltventil 4 im Hydraulikkreislauf 5 betätigt und somit der Retarder 9 zu- bzw. abgeschaltet wird. Das Schaltventil 8 kann beispielsweise über die Steuerungs- und Regelungseinheit 17 angesteuert werden. Wird eine Bremsung eingeleitet, so muss der Retarder 9 möglichst schnell befüllt werden. Hierfür wird über das Proportionalventil 11 ein Steuerdruck erzeugt, der die Hydraulikpumpe 1 auf eine maximale Verdrängung einstellt. Um die geforderte Ansprechzeit des Systems zu gewährleisten, ist ein großer Ölvolumenstrom erforderlich.

Um diesen Ölvolumenstrom trotz eines relativ langen Getriebesaugkanals 14 sicher zu gewährleisten, weist das elektrohydraulische System 18 zur Ansteuerung des hydrodynamischen Retarders 9 das Befüllventil 10 auf. Durch das Befüllventil 10 kann eine Verbindung zwischen dem Ölreservoir 12 und dem Saugkanal 13 der Hydraulikpumpe 1 hergestellt werden. Das Ölreservoir 12 ist vorzugsweise nahe am Retarder 9 liegend angeordnet. Somit wird sichergestellt, dass der Retarder 9 in ausreichend kurzer Zeit zusätzlich aus diesem Ölreservoir 12 befüllt werden kann. Über den Getriebesaugkanal 14 muss daher nicht mehr die gesamte Ölmenge angesaugt werden. Das Befüllventil 10 ist als 2/2-Wegeventil dargestellt, welches durch eine entsprechende Ansteuerung das Ölreservoir 12 mit einem Saugkanal 13 der Hydraulikpumpe 1 verbindet. Das Befüllventil 10 kann allerdings in verschiedenen Ausführungsformen ausgebildet sein, beispielsweise auch als Rückschlagventil oder als 3/2- Wegeventil. Eine im elektrohydraulischen System 18 anfallende Leckage kann durch die Hydraulikpumpe 1 ausgeglichen werden. Vorteilhafterweise wird die Leckage und das nach dem Ausschalten des Retarders 9 frei werdende Ölvolumen zurück in das Ölreservoir 12 geleitet, wodurch sofort nach dem Ausschalten des Retarders 9 wieder genügend Öl für die nächste Bremsung bereit steht und somit eine Wiederansprechzeit des Systems 18 gleich der Erstansprechzeit ist. Das Ölreservoir 12 weist eine Überlaufkante 16 zum Getriebesumpf 15 auf. Erst wenn der Ölstand im Ölreservoir 12 einen bestimmten Füllstand erreicht hat, also das Ölreservoir 12 voll befüllt ist, läuft das überschüssige Öl zurück in den Getriebesumpf 15. So kann auch bei extremen Bergabfahrten genügend Öl in der Nähe des Retarders 9 auf Vorrat gehalten werden. Wird eine Bremsung eingeleitet, so werden die Ventile 8, 11 durch die Steuerungs- und Regelungseinheit 17 angesteuert. In der Fig. 1 sind die Ventile 8, 11 im betätigten Zustand dargestellt. Durch das Ventil 11 wird die Hydraulikpumpe 1 auf eine vorzugsweise maximale Verdrängung eingestellt und das Befüllventil 10 betätigt. Durch das betätigte Ventil 8 wird das Ventil 4 betätigt und somit der Hydraulikkreislauf 5 geschlossen. Es kann also ein großer Ölvo-Iumenstrom aus dem Ölreservoir 12 in den Hydraulikkreislauf 5 und somit in den Retarder 9 geleitet werden. Die Höhe der Bremswirkung des Retarders 9 kann über den Pumpendruck der Hydraulikpumpe 1 eingestellt werden, welcher sich über das Schaltventil 11 variieren lässt.

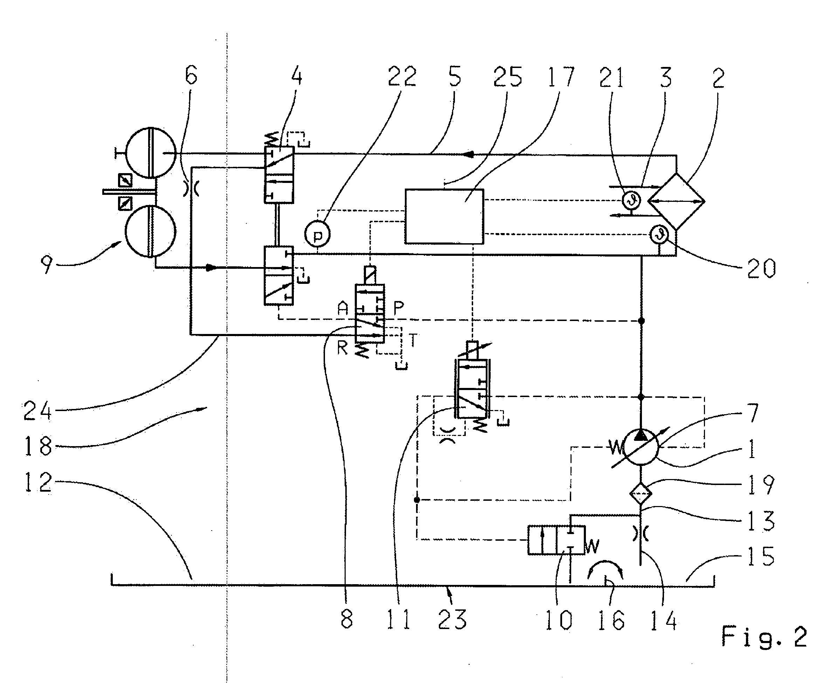

Die Fig. 2 zeigt das in der Fig. 1 beschriebene elektrohydraulische System 18 während einer Getriebetemperierung. Die Getriebetemperierung stellt die Grundstellung des elektrohydraulischen Systems 18 dar. Da die Getriebetemperierung einen Hauptanteil während eines Fahrbetriebes darstellt, stellt sich diese Betriebsstellung vorteilhafterweise ohne elektrische Ansteuerung selbständig ein. In diesem Betriebszustand kann die im Getriebe anfallende Wärme an das Fahrzeugkühlsystem 3 abgegeben bzw. die Getriebeöltemperatur an die Temperatur des Fahrzeugkühlsystems 3 angepasst (gekühlt oder erwärmt) werden. Im Hydraulikkreislauf 5 sind das Schaltventil 4 und die Blende 6 angeordnet, welche in Verbindung mit den Hydraulikkanälen einen entsprechenden Druckabfall erzeugen. Der Druck wirkt auf die Rückführfläche 7 an der Hydraulikpumpe 1, wodurch diese einen erforderlichen Volumenstrom unabhängig von der Pumpendrehzahl selbständig regeln kann. Die Blende 6 stellt einen definierten hydraulischen Querschnitt dar und ist in der Rückflussleitung 24 angeordnet. Das Befüllventil 10 befindet sich in nicht betätigtem Zustand. Während einer bremsfreien Phase saugt die Hydraulikpumpe 1 vom Getriebesumpf 15 Öl an, welches durch den Wärmetauscher 2 und anschließend in das Ölreservoir 12 geleitet wird. Hierdurch wird die Öltemperatur des Getriebes an die Temperatur eines Fahrzeugkühlmittels des Fahrzeugkühlsystems 3 angepasst.

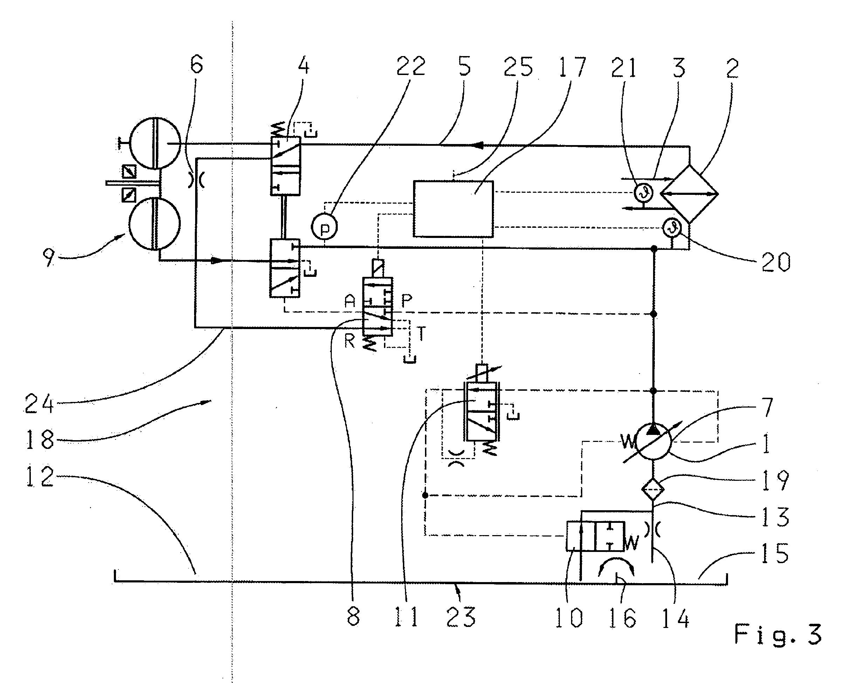

Die Fig. 3 zeigt das in der Fig. 1 beschriebene elektrohydraulische System 18 während einer Retardertemperierung. Die Retardertemperierung kann immer dann eingeschaltet werden, wenn es sinnvoll ist, das Ölreservoir 12 unabhängig vom Getriebe zu kühlen oder anzuwärmen. Hierfür wird das Proportionalventil 11 derart angesteuert, dass das Befüllventil 10 die Verbindung zwischen dem Ölreservoir 12 und dem Saugkanal 13 der Hydraulikpumpe 1 herstellt. Dies kann unmittelbar nach einem Bremsvorgang erfolgen, bei dem das Ölreservoir 12 und somit der Retarder 9 eine deutlich höhere Temperatur aufweisen, als das Grundgetriebe und/oder das Fahrzeugkühlsystem 3. Die Retardertemperierung ermöglicht somit eine schnelle Rückkühlung des Ölreservoirs 12 und der Retarderbauteile, um bei einer nachfolgenden Bremsung eine möglichst hohe Energiepufferung und somit eine maximal mögliche Bremsleistung dem Fahrzeugbremssystem zur Verfügung stellen zu können. Die Effektivität und Verfügbarkeit des Bremssystems können somit deutlich verbessern werden.

Durch eine Anhebung des Pumpendrucks durch das Proportionalventil 11 lässt sich der Kühlölvolumenstrom der Hydraulikpumpe 1 und somit die Kühlwirkung erhöhen, was eine kurze Rückkühlzeit des Ölreservoirs 12 und des Retarders 9 ermöglicht. Das Befüllventil 10 ist als 2/2-Wegeventil dargestellt. Dieses lässt sich leicht in den Bauraum des elektrohydraulischen Systems 18 integrieren und garantiert eine minimale Ansaugung aus dem Getriebesumpf 15, um eine eventuell auftretende Leckage im elektrohydraulischen System 18 auszugleichen.

Durch eine entsprechende Ansteuerung des Proportionalventils 11 kann während einer bremsfreien Phase des Retarders 9 das Befüllventil 10 angesteuert und dadurch die Saugstelle der Hydraulikpumpe 1 zwischen dem Getriebesumpf 15 (Getriebetemperierung) und dem Ölreservoir 12 (Retardertemperierung) umgeschaltet werden.

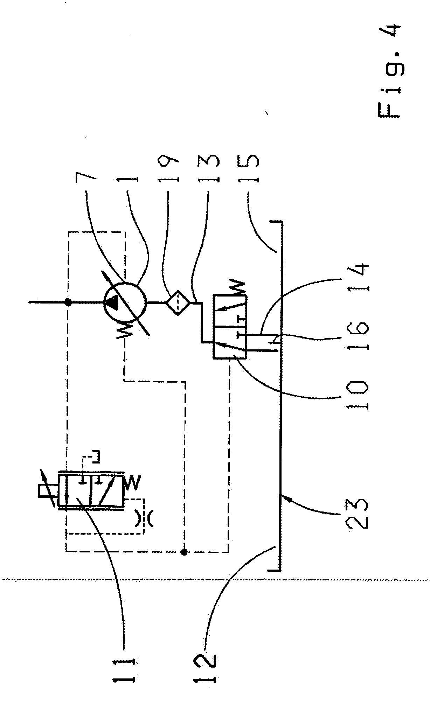

Die Fig. 4 zeigt einen Teilausschnitt der Fig. 3. Hier ist das Befüllventil 10 als 3/2-Wegeventil ausgebildet. Diese Ausführungsform weist den Vorteil einer eindeutigen Trennung zwischen dem Retarder 9 und dem Getriebe während einer Retardertemperierung auf. Durch das Betätigen des Befüllventils 10 kann also ausschließlich das Öl aus dem Ölreservoir 12 angesaugt und gekühlt werden.

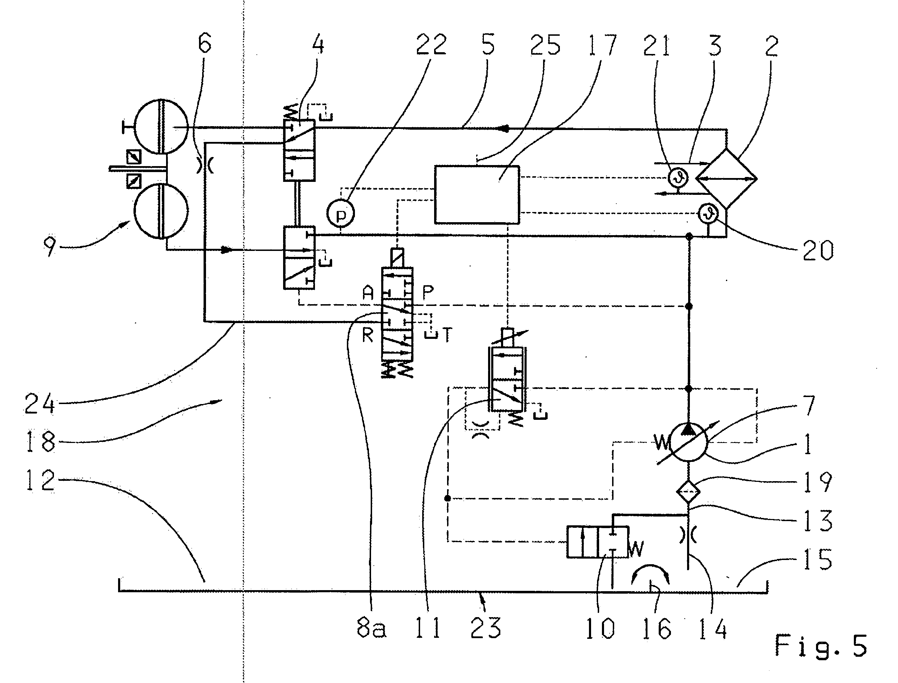

Die Fig. 5 zeigt eine weitere Ausführungsform der Erfindung. Der einzige Unterschied zu der in der Fig. 2 beschriebenen Ausführungsform besteht darin, dass das Schaltventil 8 als 3 Stellungsventil 8a ausgebildet ist, bzw. zu einem Ventil mit drei Schaltstellungen erweitert wurde. Durch die zusätzliche mittlere Stellung des Schaltventils 8a kann die Rückflussleitung 24 verschlossen und somit die Temperierung im Zugbetrieb, also während einer bremsfreien Phase des Retarders 9, generell abgeschaltet bzw. auf eine Minimalförderung zur Leckagedeckung reduziert werden. Die Hydraulikpumpe 1 regelt dann selbständig den Volumenstrom auf "NULL" bzw. auf eine Minimalförderung zurück. Dies kann immer dann erforderlich sein, wenn sich die Temperatur des Fahrzeugkühlsystems 3 für eine Getriebe- und/oder Retardertemperierung als nicht vorteilhaft darstellen lässt. In diesem Betriebszustand kann die Hydraulikpumpe 1 mit minimaler Antriebsleistung betrieben werden, wodurch eine Reduzierung des Kraftstoffverbrauchs erzielt werden kann. Durch die Verwendung des bereits vorhandenen Schaltventils 8 (siehe Fig. 2), welches zum Schaltventil 8a mit drei Schaltstellungen erweitert wird, kann hier kostengünstig und ohne zusätzlichen Aufwand die Funktion "Temperierung AUS" realisiert werden. Das Schaltventil 8a ist als 5/3-Wegeventil ausgebildet und befindet sich in seiner Mittelstellung.

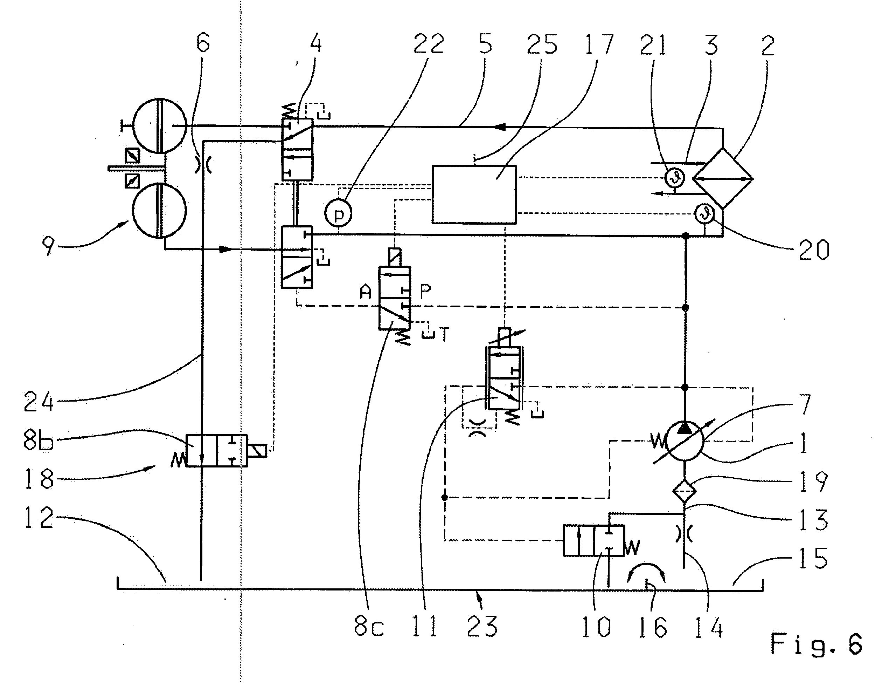

Die in Fig. 5 beschriebene Funktion "Temperierung AUS" kann auch durch die in der Fig. 6 dargestellte Ausführungsform realisiert werden. Hier weist das elektrohydraulische System 18 ein Schaltventil 8c auf, welches als 3/2-wegeventil ausgebildet ist und zur Ansteuerung des Schaltventils 4 dient. Das Sperren des Kühlölvolumenstromes in der Rückflussleitung 24 wird über ein zusätzliches Schaltventil 8b realisiert, welches in der Rückflussleitung 24 angeordnet ist. Das Schaltventil 8b kann als 2/2-Wegeventil ausgebildet sein und von der Steuerungs- und Regelungseinheit 17 angesteuert werden.

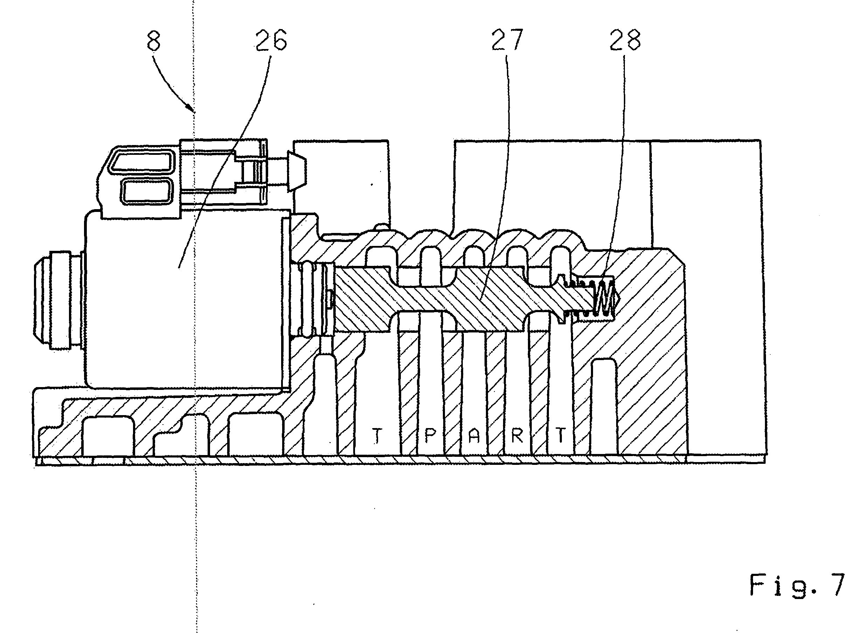

Die Fig. 7 zeigt eine bekannte konstruktive Ausführungsform des Schaltventils 8, welches als 5/2-Wegeventil ausgebildet ist und somit zwei Schaltstellungen aufweist. Das Schaltventil 8 besteht aus einem Elektromagneten 26, einem Kolben 27 und einer Rückstellfeder 28. Über die dargestellten Anschlüsse P/A/T kann der Retarder 9 zu- bzw. abgeschaltet werden. Da diese Ausführungsform aus dem Stand der Technik bekannt ist, wird diese hier nicht näher beschrieben.

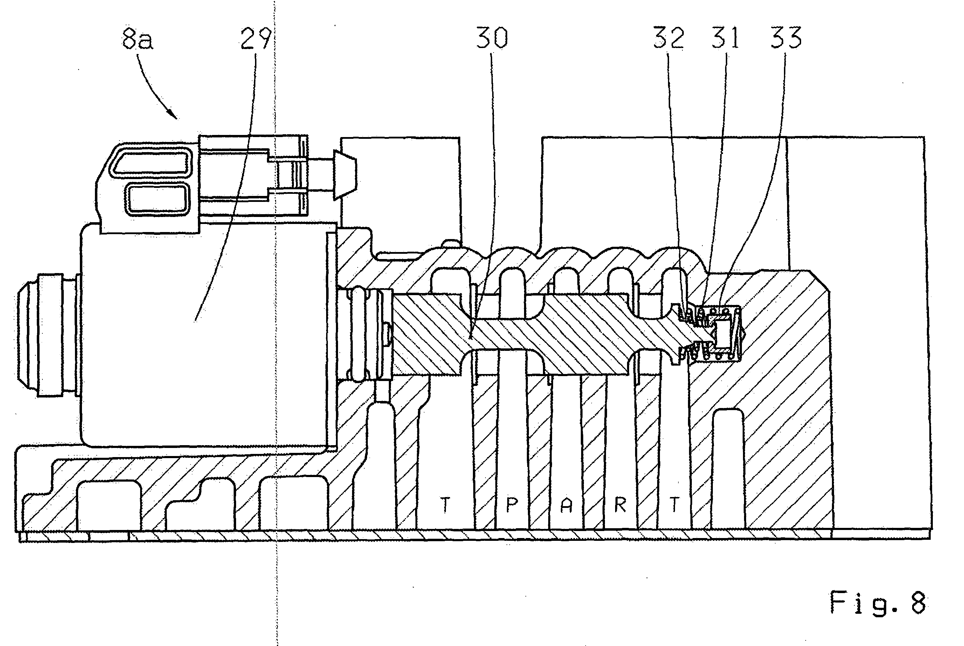

Die Fig. 8 zeigt beispielhaft eine erfindungsgemäße Ausführungsform eines hydraulischen Schaltventils 8a, welches als 5/3-Wegeventil ausgebildet ist und somit drei Schaltstellungen aufweist. Das Schaltventil 8a besteht aus einem Elektromagneten 29, einem Kolben 30, einer Doppelfederanordnung 31, 32 und einer Ventilscheibe 33. Der Verstellhub des Kolbens 30 wird durch den Elektromagneten 29 erzeugt. Durch eine entsprechende Ansteuerung des Elektromagneten 29 wird eine Kraft erzeugt, welche auf den Kolben 30 wirkt, wodurch der Kolben 30 entsprechend verschoben wird. Die äußere Feder 31 wirkt über den gesamten Verstellhub des Klobens 30. Die zweite Feder 32 ist mittels einer Ventilscheibe 33 so vorgespannt, dass erst nach einem vordefinierten Verstellhub des Kolbens 30, welcher die Mittelstellung des Schaltventils 8a darstellt, eine der vom Elektromagneten 29 erzeugten Kraft entgegengerichtete Kraft entsteht. Durch diese Anordnung kann die Mittelstellung des Schaltventils 8a funktionssicher und positionsgenau angefahren werden. Die Ventilscheibe 33 und die zweite Feder 32 werden hierbei verliersicher auf dem Kolben 30 angeordnet. Das Schaltventil 8a ist montagefreundlich, robust und unempfindliche gegenüber Fertigungstoleranzen herstellbar. Des Weiteren kann das Schaltventil 8a kostengünstig hergestellt werden, da die Herstellung durch einen einfachen Fügeprozess realisiert werden kann, beispielsweise durch Verstemmen, und keine Befestigungsteile benötigt werden, wie beispielsweise Schrauben oder Sicherungsringe.

### Bezugszeichen

- 1: Hydraulikpumpe
- 2: Wärmetauscher
- 3: Fahrzeugkühlsystem
- 4: Schaltventil
- 5: Hydraulikkreislauf
- 6: Blende, Drossel
- 7: Rückführfläche an der Hydraulikpumpe
- 8: Schaltventil, 5/2-wegeventil
- 8a: Schaltventil, 5/3-Wegeventil
- 8b: Schaltventil, 2/2-Wegeventil
- 8c: Schaltventil, 3/2-Wegeventil
- 9: Retarder
- 10: Befüllventil
- 11: Schaltventil
- 12: Ölreservoir
- 13: Saugkanal
- 14: Getriebesaugkanal
- 15: Getriebesumpf
- 16: Überlaufkante
- 17: Steuerungs- und Regelungseinheit, ECU
- 18: elektrohydraulisches System
- 19: Filter
- 20: Temperatursensor
- 21: Temperatursensor
- 22: Drucksensor
- 23: gemeinsamer Ölhaushalt
- 24: Rücktlussleitung
- 25: Controller Area Network (CAN)
- 26: Elektromagnet
- 27: Kolben
- 28: Rückstellfeder
- 29: Elektromagnet
- 30: Kolben
- 31: Feder
- 32: Feder
- 33: Ventilscheibe

## Patentansprüche

1. Hydrodynamischer Retarder (9) für ein Kraftfahrzeug, welcher einen Rotor und einen Stator aufweist und mit einem Getriebe einen gemeinsamen Ölhaushalt (23) bildet und über ein elektrohydraulisches System (18) ansteuerbar ist, mit einer Steuerungs- und Regelungseinheit (17) und einem Hydraulikkreislauf (5), welcher eine Pumpe (1), einen Wärmetauscher (2) und ein Ventil (4) aufweist, wobei ein Volumenstrom der Pumpe (1) unabhängig von der Fahrzeuggeschwindigkeit bzw. der Gelenkwellen- oder Retarderdrehzahl verstellbar ist und über die Pumpe (1) ein Ölumlauf sichergestellt wird, **dadurch gekennzeichnet, dass** der gemeinsame Ölhaushalt (23) aus einem Ölreservoir (12) und einem Getriebesumpf (15) besteht und das Ölreservoir (12) über ein Befüllventil (10) mit einem Saugkanal (13) der Pumpe (1) verbindbar ist und im elektrohydraulischen System (18) ein Ventil (8, 8a, 8b) angeordnet ist, über welches ein Volumenstrom in einer Rückflussleitung (24) zum Ölhaushalt (23) steuerbar bzw. regelbar ist und während einer bremsfreien Phase des Retarders (9) eine Getriebetemperierung bzw. eine Retardertemperierung wählbar oder eine Temperierung des Ölhaushalts (23) abschaltbar ist.

2. Hydrodynamischer Retarder (9) nach Anspruch 1, **dadurch gekennzeichnet, dass** das Befüllventil (10) als 2/2-Wegeventil ausgebildet ist,

3. Hydrodynamischer Retarder (9) nach Anspruch 1, **dadurch gekennzeichnet, dass** das Befüllventil (10) als 3/2-Wegeventil ausgebildet ist.

4. Hydrodynamischer Retarder (9) nach einem der Ansprüche 1 bis 3, **dadurch gekennzeichnet, dass** das Befüllventil (10) über ein im elektrohydraulischen System (18) bereits vorhandenes Schaltventil (11) hydraulisch ansteuerbar ist, beispielsweise durch ein Proportionalventil.

5. Hydrodynamischer Retarder (9) nach Anspruch 1, **dadurch gekennzeichnet, dass** das Befüllventil (10) als selbsttätig öffnendes Rückschlagventil ausgebildet ist.

6. Hydrodynamischer Retarder (9) nach Anspruch 1, **dadurch gekennzeichnet, dass** der gemeinsame Ölhaushalt (23) zwischen dem Ölreservoir (12) und dem Getriebesumpf (15) eine Überlaufkante (16) aufweist.

7. Hydrodynamischer Retarder (9) nach Anspruch 1, **dadurch gekennzeichnet, dass** das Ventil (8) als 5/2-Wegeventil ausgebildet ist.

8. Hydrodynamischer Retarder (9) nach Anspruch 1, **dadurch gekennzeichnet, dass** das Ventil (8a) als 5/3-Wegeventil ausgebildet ist und einen Elektromagneten (29) sowie einen Kolben (30) aufweist.

9. Hydrodynamischer Retarder (9) nach Anspruch 8, **dadurch gekennzeichnen, dass** das Ventil (8a) eine Feder (31) aufweist, welche auf den gesamten Verstellhub des Kolbens (30) wirkt.

10. Hydrodynamischer Retarder (9) nach einem der Ansprüche 8 oder 9, **dadurch gekennzeichnet, dass** das Ventil (8a) eine zweite Feder (32) und eine Ventilscheibe (33) aufweist, wodurch das Ventil (8a) in einer Mittelstellung positionierbar ist.

11. Hydrodynamischer Retarder (9) nach einem der Ansprüche 8 bis 10, **dadurch gekennzeichnet, dass** die Ventilscheibe (33) und die zweite Feder (32) mit dem Kolben (30) des Ventils (8a) verliersicher verbunden sind.

12. Hydrodynamischer Retarder (9) nach Anspruch 1, **dadurch gekennzeichnet, dass** das Ventil (8b) als 2/2-Wegeventil ausgebildet ist.

13. Hydrodynamischer Retarder (9) nach einem der vorangegangenen Ansprüche, **dadurch gekennzeichnet, dass** der Volumenstrom in der Rückflussleitung (24) zum Ölhaushalt (23) durch das Ventil (8, 8a, 8b) teilweise bis komplett sperrbar ist.

14. Hydrodynamischer Retarder (9) nach einem der vorangegangenen Ansprüche, **dadurch gekennzeichnet, dass** die Funktion "Temperierung AUS", welche durch das Ventil (8a, 8b) realisiert wird, in ein bereits vorhandenes Ventil (8) integrierbar ist.

15. Hydrodynamischer Retarder (9) nach einem der vorangegangenen Ansprüche, **dadurch gekennzeichnet, dass** die im elektrohydraulischen System (18) angeordneten Ventile (8, 8a, 8b, 8c, 10, 11) über die Steuerungs- und Regelungseinheit (17) ansteuerbar sind.

16. Hydrodynamischer Retarder (9) nach einem der vorangegangenen Ansprüche, **dadurch gekennzeichnet, dass** die im elektrohydraulischen System (18) angeordneten Ventile (8, 8a, 8b, 8c, 10, 11) über eine separate Einheit ansteuerbar sind.

17. Hydrodynamischer Retarder (9) nach einem der vorangegangenen Ansprüche, **dadurch gekennzeichnet, dass** die im elektrohydraulischen System (18) angeordneten Ventile (8, 8a, 8b; 8c, 10, 11) elektrisch, elektromechanisch, pneumatisch, hydraulisch oder über einen Stellmotor ansteuerbar sind.

18. Hydrodynamischer Retarder (9) nach einem der vorangegangenen Ansprüche, **dadurch gekennzeichnet, dass** die im elektrohydraulischen System (18) angeordneten Ventile (4, 8, 8a, 8b, 8c, 10, 11) in jeder bekannten Ventilform darstellbar sind.

19. Verfahren zur Ansteuerung eines hydrodynamischen Retarders (9) für ein Kraftfahrzeug, welcher über ein elektrohydraulisches System (18) angesteuert wird, wobei ein Volumenstrom einer Pumpe (1) unabhängig von der Fahrzeuggeschwindigkeit bzw. der Gelenkwellen- oder Retarderdrehzahl verstellbar ist, **dadurch gekennzeichnet, dass** ein Ölreservoir (12) über ein Befüllventil (10) mit einem Saugkanal (13) der Pumpe (1) verbunden und ein Volumenstrom in einer Rückflussleitung (24) zu einem Ölhaushalt (23) durch ein Ventil (8, 8a, 8b) gesteuert bzw, geregelt wird und während einer bremsfreien Phase des Retarders (9) zwischen einer Getriebetemperierung und einer Retardertemperierung gewählt bzw. eine Temperierung des Ölhaushalts (23) abgeschaltet werden kann.

20. Verfahren nach Anspruch 19, **dadurch gekennzeichnet, dass** für eine Getriebetemperierung das Befüllventil (10) und das Schaltventil (8) nicht betätigt werden.

21. Verfahren nach Anspruch 19, **dadurch gekennzeichnet, dass** für eine Retardertemperierung das Befüllventil (10) betätigt und das Schaltventil (8) nicht betätigt wird.

22. Verfahren nach Anspruch 19, **dadurch gekennzeichnet, dass** für die Abschaltung einer Temperierung des Ölhaushalts (23) das Schaltventil (8a) derart angesteuert wird, dass es sich in einer Mittelposition befindet und **dadurch** den Volumenstrom in der Rückflussleitung (24) sperrt.

23. Verfahren nach Anspruch 19, **dadurch gekennzeichnet, dass** für die Abschaltung einer Temperierung des Ölhaushalts (23) das Schaltventil (8b) derart angesteuert wird, dass es den Volumenstrom in der Rückflussleitung (24) sperrt.

## Claims

1. Hydrodynamic retarder (9) for a motor vehicle, which retarder has a rotor and a stator and forms with a transmission a common oil balance (23) and which can be activated via an electrohydraulic system (18), with a control and regulation unit (17) and with a hydraulic circuit (5) which has a pump (1), a heat exchanger (2) and a valve (4), a volume flow of the pump (1) being adjustable independently of the vehicle speed or of the cardan shaft or retarder rotational speed, and oil circulation being ensured via the pump (1), **characterized in that** the common oil balance (23) consists of an oil reservoir (12) and of a transmission sump (15), and the oil reservoir (12) is connectable to a suction duct (13) of the pump (1) via a filling valve (10), and the electrohydraulic system (18) has arranged in it a valve (8, 8a, 8b), via which a volume flow in a return line (24) to the oil balance (23) can be controlled or regulated, and, during a brake-free phase of the retarder (9), transmission temperature control or retarder temperature control can be selected or temperature control of the oil balance (23) can be switched off.

2. Hydrodynamic retarder (9) according to Claim 1, **characterized in that** the filling valve (10) is designed as a 2/2-way valve.

3. Hydrodynamic retarder (9) according to Claim 1, **characterized in that** the filling valve (10) is designed as a 3/2-way valve.

4. Hydrodynamic retarder (9) according to one of Claims 1 to 3, **characterized in that** the filling valve (10) can be activated hydraulically via a switching valve (11) already present in the electrohydraulic system (18), for example by means of a proportional valve.

5. Hydrodynamic retarder (9) according to Claim 1, **characterized in that** the filling valve (10) is designed as an automatically opening non-return valve.

6. Hydrodynamic retarder (9) according to Claim 1, **characterized in that** the common oil balance (23) has an overflow edge (16) between the oil reservoir (12) and the transmission sump (15).

7. Hydrodynamic retarder (9) according to Claim 1, **characterized in that** the valve (8) is designed as a 5/2-way valve.

8. Hydrodynamic retarder (9) according to Claim 1, **characterized in that** the valve (8a) is designed as a 5/3-way valve and has an electromagnet (29) and a piston (30).

9. Hydrodynamic retarder (9) according to Claim 8, **characterized in that** the valve (8a) has a spring (31) which acts upon the entire adjustment stroke of the piston (30).

10. Hydrodynamic retarder (9) according to either one of Claims 8 and 9, **characterized in that** the valve (8a) has a second spring (32) and a valve disc (33), with the result that the valve (8a) can be positioned in a middle position.

11. Hydrodynamic retarder (9) according to one of Claims 8 to 10, **characterized in that** the valve disc (33) and the second spring (32) are connected captively to the piston (30) of the valve (8a).

12. Hydrodynamic retarder (9) according to Claim 1, **characterized in that** the valve (8b) is designed as a 2/2-way valve.

13. Hydrodynamic retarder (9) according to one of the preceding claims, **characterized in that** the volume flow in the return line (24) to the oil balance (23) can be shut off partially to completely by means of the valve (8, 8a, 8b).

14. Hydrodynamic retarder (9) according to one of the preceding claims, **characterized in that** the "Temperature control OFF" function which is performed by the valve (8a, 8b), can be integrated into an already existing valve (8).

15. Hydrodynamic retarder (9) according to one of the preceding claims, **characterized in that** the valve (8, 8a, 8b, 8c, 10, 11) arranged in the electrohydraulic system (18) can be activated via the control and regulation unit (17).

16. Hydrodynamic retarder (9) according to one of the preceding claims, **characterized in that** the valves (8, 8a, 8b, 8c, 10, 11) arranged in the electrohydraulic system (18) can be activated via a separate unit.

17. Hydrodynamic retarder (9) according to one of the preceding claims, **characterized in that** the valves (8, 8a, 8b, 8c, 10, 11) arranged in the electrohydraulic system (18) can be activated electrically, electromechanically, pneumatically, hydraulically or via a servomotor.

18. Hydrodynamic retarder (9) according to one of the preceding claims, **characterized in that** the valves (4, 8, 8a, 8b, 8c, 10, 11) arranged in the electrohydraulic system (18) can be produced in any known valve form.

19. Method for activating a hydrodynamic retarder (9) for a motor vehicle, which retarder is activated via an electrohydraulic system (18), a volume flow of a pump (1) being adjustable independently of the vehicle speed of the cardan shaft or retarder rotational speed, **characterized in that** an oil reservoir (12) is connected to a suction duct (13) of the pump (1) via a filling valve (10), and a volume flow in a return line (24) to an oil balance (23) is controlled or regulated by means of a valve (8, 8a, 8b), and, during a brake-free phase of the retarder (9), a selection can be made between transmission temperature control and retarder temperature control or temperature control of the oil balance (23) can be switched off.

20. Method according to Claim 19, **characterized in that**, for transmission temperature control, the filling valve (10) and the switching valve (8) are not actuated.

21. Method according to Claim 19, **characterized in that**, for retarder temperature control, the filling valve (10) is actuated and the switching valve (8) is not actuated.

22. Method according to Claim 19, **characterized in that**, for switching off temperature control of the oil balance (23), the switching valve (8a) is activated in such a way that it is in a middle position and thereby shuts off the volume flow in the return line (24).

23. Method according to Claim 19, **characterized in that**, for switching off temperature control of the oil balance (23), the switching valve (8b) is activated in such a way that it shuts off the volume flow in the return line (24).

## Revendications

1. Retardateur hydrodynamique (9) pour un véhicule automobile, qui présente un rotor et un stator, et qui forme, avec une transmission, un carter d'huile commun (23) et qui peut être commandé par le biais d'un système électrohydraulique (18), avec une unité de commande et de régulation (17) et un circuit hydraulique (5), qui présente une pompe (1), un échangeur de chaleur (2) et une soupape (4), un débit volumique de la pompe (1) pouvant être réglé indépendamment de la vitesse du véhicule ou du régime de l'arbre articulé ou du retardateur, et une circulation d'huile étant assurée par le biais de la pompe (1), **caractérisé en ce que** le carter d'huile commun (23) se compose d'un réservoir d'huile (12) et d'un carter de transmission (15) et le réservoir d'huile (12) peut être connecté par le biais d'une soupape de remplissage (10) à un canal d'aspiration (13) de la pompe (1), et une soupape (8, 8a, 8b) est disposée dans le système électrohydraulique (18), par le biais de laquelle un débit volumique peut être commandé ou régulé dans une conduite de reflux (24) vers le carter d'huile (23), et pendant une phase sans freinage du retardateur (9), une mise en température de la transmission ou une mise en température du retardateur peut être sélectionnée ou une mise en température du carter d'huile (23) peut être coupée.

2. Retardateur hydrodynamique (9) selon la revendication 1, **caractérisé en ce que** la soupape de remplissage (10) est réalisée sous forme de soupape à 2/2 voies.

3. Retardateur hydrodynamique (9) selon la revendication 1, **caractérisé en ce que** la soupape de remplissage (10) est réalisée sous forme de soupape à 3/2 voies.

4. Retardateur hydrodynamique (9) selon l'une quelconque des revendications 1 à 3, **caractérisé en ce que** la soupape de remplissage (10) peut être commandée de manière hydraulique par le biais d'une soupape de commutation (11) déjà présente dans le système électrohydraulique (18), par exemple par une soupape proportionnelle.

5. Retardateur hydrodynamique (9) selon la revendication 1, **caractérisé en ce que** la soupape de remplissage (10) est réalisée sous forme de soupape antiretour s'ouvrant automatiquement.

6. Retardateur hydrodynamique (9) selon la revendication 1, **caractérisé en ce que** le carter d'huile commun (23) présente entre le réservoir d'huile (12) et le carter de transmission (15) une arête de débordement (16).

7. Retardateur hydrodynamique (9) selon la revendication 1, **caractérisé en ce que** la soupape (8) est réalisée sous forme de soupape à 5/2 voies.

8. Retardateur hydrodynamique (9) selon la revendication 1, **caractérisé en ce que** la soupape (8a) est réalisée sous forme de soupape à 5/3 voies et présente un électroaimant (29) ainsi qu'un piston (30).

9. Retardateur hydrodynamique (9) selon la revendication 8, **caractérisé en ce que** la soupape (8a) présente un ressort (31) qui agit sur la course de réglage totale du piston (30).

10. Retardateur hydrodynamique (9) selon l'une quelconque des revendications 8 ou 9, **caractérisé en ce que** la soupape (8a) présente un deuxième ressort (32) et une rondelle de ressort (33), de sorte que la soupape (8a) puisse être positionnée dans une position centrale.

11. Retardateur hydrodynamique (9) selon l'une quelconque des revendications 8 à 10, **caractérisé en ce que** la rondelle de soupape (33) et le deuxième ressort (32) sont connectés de manière imperdable au piston (30) de la soupape (8a).

12. Retardateur hydrodynamique (9) selon la revendication 1, **caractérisé en ce que** la soupape (8b) est réalisée sous forme de soupape à 2/2 voies.

13. Retardateur hydrodynamique (9) selon l'une quelconque des revendications précédentes, **caractérisé en ce que** le débit volumique dans la conduite de reflux (24) vers le carter d'huile (23) peut être partiellement à complètement bloqué par la soupape (8, 8a, 8b).

14. Retardateur hydrodynamique (9) selon l'une quelconque des revendications précédentes, **caractérisé en ce que** la fonction "ARRET mise en température", qui est réalisée par la soupape (8a, 8b), peut être intégrée dans une soupape (8) déjà présente.

15. Retardateur hydrodynamique (9) selon l'une quelconque des revendications précédentes, **caractérisé en ce que** les soupapes (8, 8a, 8b, 8c, 10, 11) disposées dans le système électrohydraulique (18) peuvent être commandées par le biais de unité de commande et de régulation (17).

16. Retardateur hydrodynamique (9) selon l'une quelconque des revendications précédentes, **caractérisé en ce que** les soupapes (8, 8a, 8b, 8c, 10, 11) disposées dans le système électrohydraulique (18) peuvent être commandées par le biais d'une unité séparée.

17. Retardateur hydrodynamique (9) selon l'une quelconque des revendications précédentes, **caractérisé en ce que** les soupapes (8, 8a, 8b, 8c, 10, 11) disposées dans le système électrohydraulique (18) peuvent être commandées électriquement, électromécaniquement, pneumatiquement, hydrauliquement ou par le biais d'un moteur de réglage.

18. Retardateur hydrodynamique (9) selon l'une quelconque des revendications précédentes, **caractérisé en ce que** les soupapes (4, 8, 8a, 8b, 8c, 10, 11) disposées dans le système électrohydraulique (18) peuvent être constituées sous n'importe quelle forme de soupape connue.

19. Procédé de commande d'un retardateur hydrodynamique (9) pour un véhicule automobile, qui est commandé par le biais d'un système électrohydraulique (18), un débit volumique d'une pompe (1) pouvant être réglé indépendamment de la vitesse du véhicule ou du régime de l'arbre articulé ou du retardateur, **caractérisé en ce qu'**un réservoir d'huile (12) est connecté par le biais d'une soupape de remplissage (10) à un canal d'aspiration (13) de la pompe (1), et un débit volumique est commandé ou régulé dans une conduite de reflux (24) vers un carter d'huile (23) par une soupape (8, 8a, 8b) et pendant une phase sans freinage du retardateur (9) peut être sélectionné entre une mise en température de la transmission et une mise en température du retardateur, ou une mise en température du carter d'huile (23) peut être coupée.

20. Procédé selon la revendication 19, **caractérisé en ce que** pour une mise en température de la transmission, la soupape de remplissage (10) et la soupape de commutation (8) ne sont pas actionnées.

21. Procédé selon la revendication 19, **caractérisé en ce que** pour une mise en température du retardateur, la soupape de remplissage (10) est actionnée et la soupape de commutation (8) n'est pas actionnée.

22. Procédé selon la revendication 19, **caractérisé en ce que** pour la coupure d'une mise en température du carter d'huile (23), la soupape de commutation (8a) est commandée de telle sorte qu'elle se trouve dans une position centrale et qu'elle bloque ainsi le débit volumique dans la conduite de reflux (24).

23. Procédé selon la revendication 19, **caractérisé en ce que** pour la coupure d'une mise en température du carter d'huile (23), la soupape de commutation (8b) est commandée de telle sorte qu'elle bloque un débit volumique dans la conduite de reflux (24).
